# EUROPEAN PATENT SPECIFICATION

(11) **EP 1 377 116 B1**
(45) Date of publication and mention of the grant of the patent: **03.12.2014**
(21) Application number: 03013830.9
(22) Date of filing: 18.06.2003
(51) Int. Cl.: H04R 1/22, H04M 1/03

(54) **Receiver unit of a terminal device**
Hörer-Einheit eines Endgerätes
Unité de récepteur d'un dispositif terminal

(30) Priority: 28.06.2002 KR 2002037024
(43) Date of publication of application: 02.01.2004
(73) Proprietor: LG Electronics, Inc., Seoul 150-721 (KR)
(72) Inventor: Jo, Doo-Hwan, Yangcheon-Gu, Seoul (KR)
(74) Representative: Katérle, Axel

(56) References cited:
- EP-A- 0 232 096
- EP-A- 0 364 935
- PATENT ABSTRACTS OF JAPAN vol. 010, no. 069 (E-389), 18 March 1986 (1986-03-18) -& JP 60 217752 A (NIPPON DENSHIN DENWA KOSHA), 31 October 1985 (1985-10-31)
- PATENT ABSTRACTS OF JAPAN vol. 1999, no. 02, 26 February 1999 (1999-02-26) & JP 10 304036 A (HOSIDEN CORP), 13 November 1998 (1998-11-13)
- PATENT ABSTRACTS OF JAPAN vol. 1999, no. 14, 22 December 1999 (1999-12-22) & JP 11 266489 A (SONY CORP), 28 September 1999 (1999-09-28)

## Description

### BACKGROUND OF THE INVENTION

### 1. Field of the Invention

The present invention relates to a terminal device, and more particularly to a receiver unit of a terminal device with a controlled-volume output.

### 2. Background of the Related Art

Patent Abstracts of Japan no. 60-217752 may be construed to disclose a handset for a telephone set ,wherein a fixed clearance is provided at the fitting surface of the front cover of a telephone receiver to which a handset is fitted. Then the height, width and length of the clearance are set so that desired characteristics can be obtained. Therefore, the receiving sensitivity can be reduced in the frequency area of ≤ 0.2kHz.

JP 10-304036 A may be construed to disclose a mobile terminal in which an electroacoustic transducer is fitted water-tightly to a case and its mount part surrounds a front gas chamber of the electroacoustic transducer. Sound emitting holes that are open toward the ear hole and sound leakage holes that are open toward an outer space of the case not in the direction of the ear hole are made to the case ear pad. Thus, the difference between hearing of voice at a low frequency band in the closing state when the ear is tightly fitted to the ear pad of the case and that in the pre-leak state when the ear is detached from the ear pad is small, and a voice at the low frequency band is easily heard in both cases and the acoustic characteristic is kept flat over a prescribed frequency band.

Terminal devices generally include a Printed Circuit Board (PCB) inserted inside a main body, an operation button for performing various functions, a microphone for inputting the voice of a user, a receiver unit by which a user receives a sound, and a liquid crystal screen for displaying various information.

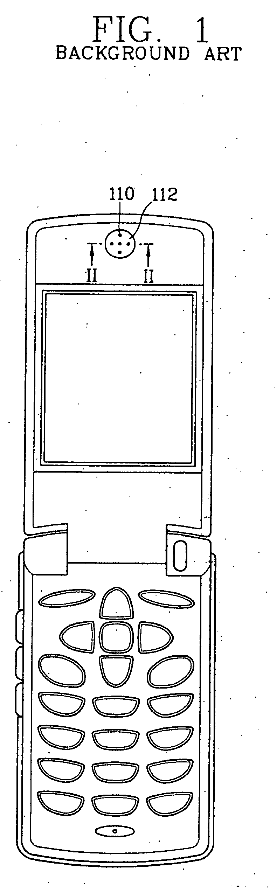

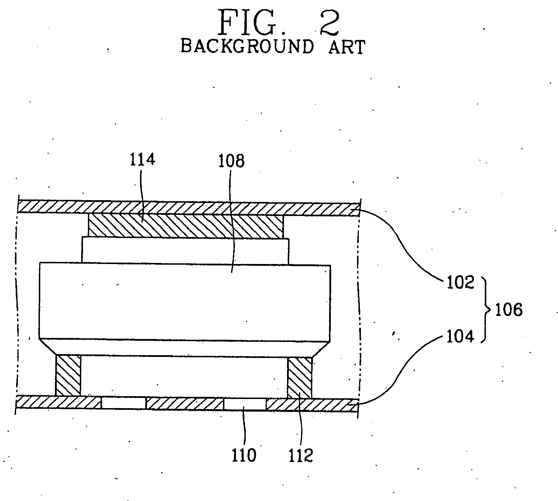

Figure 1 shows a front view of the terminal and Figure 2 is a partial sectional view showing the manner in which a receiver unit is mounted in a conventional. In these figures, a terminal main body 106 consists of an outer case 102 and an inner case 104, receiver unit 108 inserted in the main body 106 for generating a sound, one or more sound discharge holes 110 formed to penetrate the inner case and discharge sound generated from the receiver unit, and a sealing member 112 mounted between the front side of the receiver unit and the inner case for preventing leakage of sound generated from the receiver unit to areas other than the sound discharge hole. In addition to these features, a damper 114 is installed between the outer case 102 and the upper side of the receiver unit 108, and the sealing member 112 is attached hermetically between the lower side of the receiver unit 108 and the inner case 104 in order to prevent sound from the receiver unit from leaking to areas other than the sound discharge hole 110.

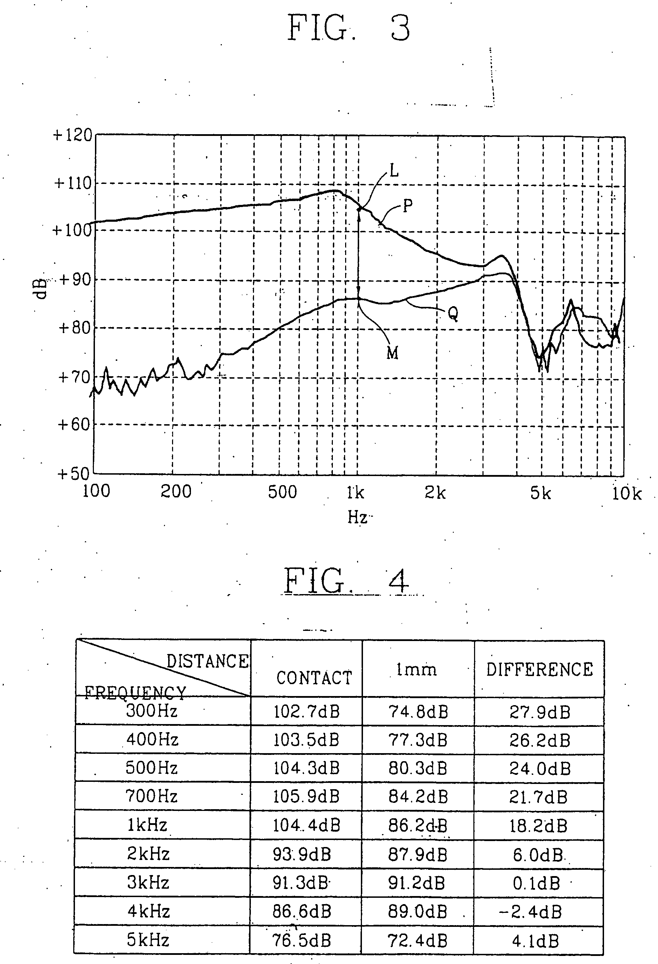

In the conventional receiver unit, sound is generated inside the receiver unit 108 when an electric signal is applied. The sound is transferred to the user through the sound discharge hole 110 formed in the inner case 104. Because space between the receiver unit 108 and inner case 104 is sealed by sealing member 112, the sound generated from the receiver unit 108 does not leak outside and is transferred to the user through the sound discharge hole 110. After sound is discharged through the sound discharge hole 110, it is leaked in every direction. A sound volume transferred to the user therefore differs depending on a reception distance between the terminal device and the user. This effect will now be described in greater detail with reference to Figures 3 and 4.

Figure 3 is a graph showing how sound volume characteristics vary based on a reception distance between a user and a receiver unit of the conventional terminal device. In this graph, Curve P is obtained when a reception distance between the terminal device and the user is 0 and Curve Q is obtained when a reception distance between the terminal device and the user is 1mm. This graph also demonstrates that when a reception distance between the terminal device and the user is 0 under conditions where the frequency discharged from the receiver is 1 Khz, a measured sound volume is 104.4 dB is obtained as indicated by point L in the graph. This signifies a sound volume measured based on the assumption that the terminal device is attached to the ear of the user and there is no sound leakage.

The graph also shows that the measured sound volume is 86.2 dB when a reception distance is 1mm and the frequency discharged from the receiver is 1Khz as indicated by point M in the graph. This signifies that more of the sound volume is transferred to the user, taking into consideration that sound leakage takes place at varying degrees among basis for users. The graph therefore shows that the sound volume difference between the case where the reception distance is 0 and the case where the reception distance is 1mm is about 18.2 dB, which is a significant difference. This translates into at least the following undesirable effects.

In the conventional terminal device, the sound volume difference that a user may feel may vary from user to user, and significantly depends on the reception distance between the terminal device and the user. As a result, the use conditions and preferences of every user may not be satisfied. Put differently, the sound volume of the receiver is set in conformity to the condition that most users generally uses it, it can not satisfy various use conditions of users.

### SUMMARY OF THE INVENTION

An object of the invention is to solve at least the above problems and/or disadvantages and to provide at least the advantages described hereinafter.

Another object of the present invention is to provide a receiver unit of a terminal device, which minimizes a sound volume change depending on a reception distance between a terminal device and a user.

There are provided a communications according to claim 1. Developments are set forth in the independent claims.

In the receiver unit of a terminal device of the present invention, a plurality of leakage holes are formed between a front side of the receiver and an inner side of the inner case in order to leak a sound therethrough in a circumferential direction.

In the receiver unit of a terminal device of the present invention, the sound leakage unit includes leakage holes formed at regular intervals in a circumferential direction of the lower housing of the receiver, and a plurality of protrusions formed protruded with a certain width.

In the receiver unit of a terminal device of the present invention, the sound leakage unit of the receiver unit has a predetermined width and is formed in a cylindrical shape with a plurality of leakage holes in a circumferential direction. Sides of the leakage unit are respectively attached to a lower housing of the receiver and the inner case.

### BRIEF DESCRIPTION OF THE DRAWINGS

Figure 1 is a front view of the terminal device;
Figure 2 is a cross-sectional view taken along section line II-II of Figure 1 showing a receiver unit of a terminal device in accordance with a conventional art;
Figure 3 is a graph showing sound volume characteristics according to a reception distance between a user of the receiver unit of the terminal device and the terminal in accordance with the conventional art;
Figure 4 is a diagram showing sound volume characteristics according to a reception distance between the user of the receiver unit of the terminal device and the terminal in accordance with the conventional art;
Figure 5 is a partial sectional view showing a receiver unit of a terminal device in accordance with one embodiment of the present invention,
Figure 6 is a perspective view of one type of leakage member in accordance with one embodiment of the present invention.
Figure 7 is a partial sectional view showing a receiver unit of a terminal device in accordance with another embodiment of the present invention;
Figure 8 is a graph showing sound volume characteristics depending on a reception distance between the user of the receiver unit of the terminal device and the terminal in accordance with the present invention; and
Figure 9 is a diagram showing sound volume characteristics depending on a reception distance between the user of the receiver unit of the terminal device and the terminal in accordance with the present invention.

### DETAILED DESCRIPTION OF PREFERRED EMBODIMENTS

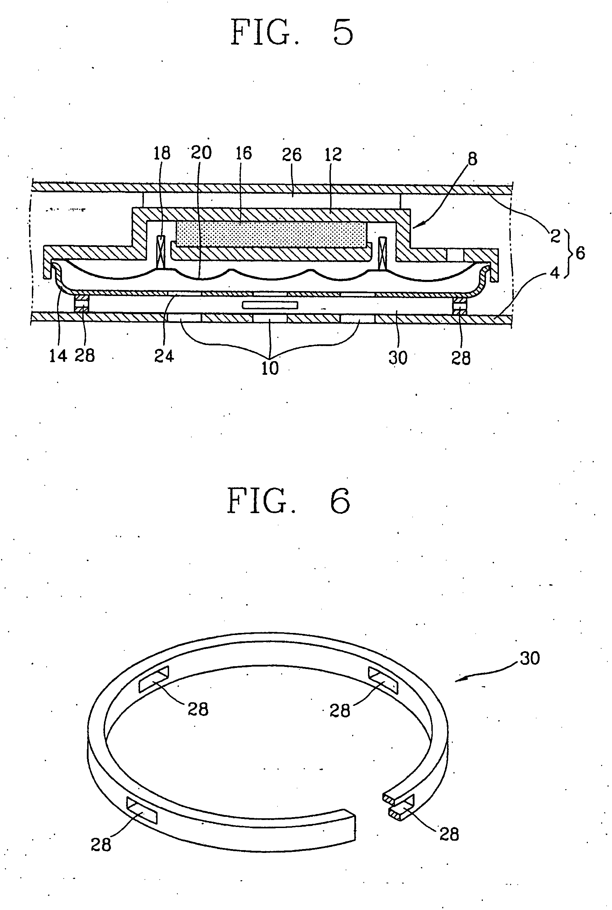

Figure 5 is a sectional view of a receiver unit of a terminal device in accordance with one embodiment of the present invention. The receiver unit includes a main body 6 having an outer case 2 and an inner case 4 coupled with the outer case 2. The main body 6 also includes a liquid crystal screen and a microphone (neither of which are shown). Also, a receiver 8 is installed inside the main body 6 for generating sound and sound discharge holes 10 are formed in the inner case 4 for outwardly discharging sound generated by the receiver 8. A sound leakage unit is disposed between the receiver 8 and the inner case 4 for leaking a portion of the sound generated from the receiver 8. The terminal device of the present invention may be adapted for use in any one of a variety of terminals including but not limited to mobile terminals, wired terminals, wireless terminals, or any other electronic device which includes a receiver or sound generator.

The receiver 8 includes an upper housing 12 and a lower housing 14 mounted in spaced relation with the upper housing 12 and having a plurality of sound paths 24 formed in a preferably circumferential direction for discharging sound. A magnet 16, a coil 18, and a vibration plate 20 are mounted in the space between the upper and lower housings 12, 14 for generating sound when current is applied thereto. A damper 26 may be attached between the upper housing 12 of the receiver 8 and the outer case 2.

The sound leakage unit includes a leakage member 30 which is preferably cylindrical in shape and installed between the circumferential surface of the lower housing 14 of the receiver 8 and an inner circumferential surface of the inner case 4. The leakage member 30 has a plurality of leakage holes 28 which are preferably formed in a circumferential direction.

Figure 6 is a perspective view of one type of leakage member 30 of the present invention. As shown, the leakage member 30 is preferably formed in a cylindrical shape with a thickness so as to maintain a desired space between the lower housing 14 and the inner case 4 of the receiver 8. In this exemplary construction, the leakage holes 28 are arranged in a regularly spaced pattern although other patterns are possible. Also, the holes 28 are shown as being generally slot shape, however, the holes 28 may be in other shapes if desired. One side of the leakage member 30 is fixed to a circumferential side of the lower housing 14 and the other side is fixed at the inner side of the inner case 4. The leakage member 30 may be attached to or held between the lower housing 14 and inner case 4 using any one of a variety of known techniques or methods.

Typically, many users use terminals at a distance of about 1mm. As a guide, a size and form of the holes 28 in the leakage member 30 may be based on the amount of sound leakage that exists when the distance between the user and terminal device is about 1mm. However, other distances may be used for purposes of determining the size, shape, and form of the leakage holes.

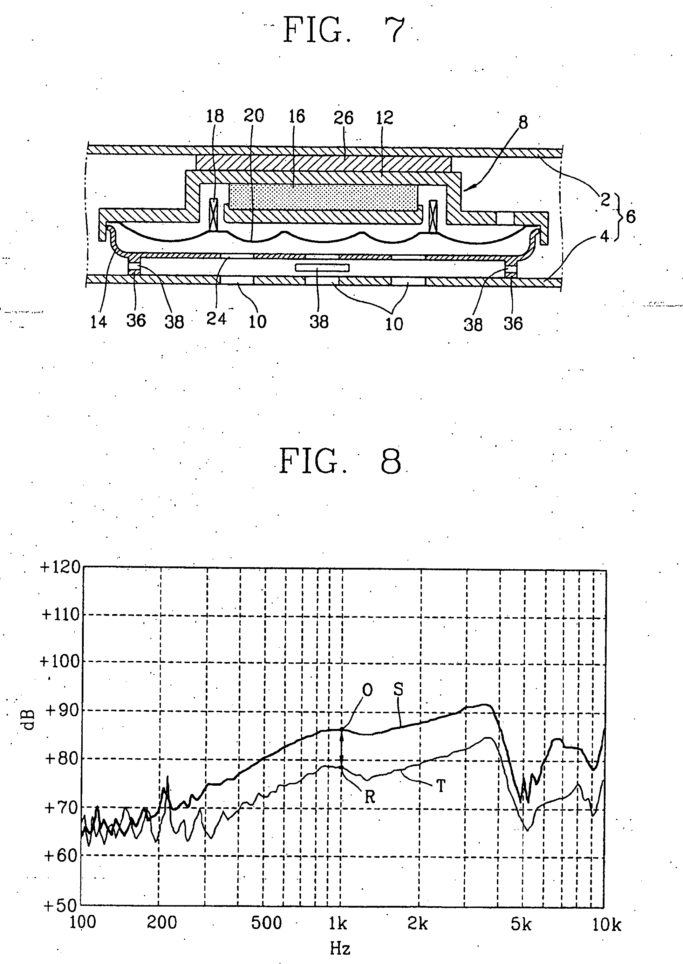

Figure 7 shows another embodiment, of the sound leakage unit of the present invention. Where applicable, like reference numerals have been used. In this embodiment, protrusions 36 are formed in a sound leakage member with a desired interval in a preferably circumferential direction in the front side of lower housing 14 of the receiver to facilitate fabrication. At this time, at least one leakage hole 38 is formed in a space between the protrusions 36 to leak sound. In addition to this leakage member 40, the sound leakage unit may maintain a certain space between the front side of the lower housing 14 and the inner case 4 and can be fabricated in any form as long as it allows a plurality of leakage holes to be formed in a desired (e.g., circumferential) direction.

In the various embodiments of the receiver unit of the terminal device of the present invention, when power is applied to the receiver, sound is generated as coil 18 and vibration plate 20 interact. The sound is discharged through sound paths 24 formed at the lower housing 14. A portion of the sound discharged through the sound paths 24 is leaked through the leakage holes (28 in Fig. 5) and (38 in Fig. 7) and then outwardly discharged through the sound discharge holes 10 of the inner case 4. Therefore, a change in the sound volume discharged through the sound discharge holes 10 of the inner case 4 can be minimized when it is transmitted to the user.

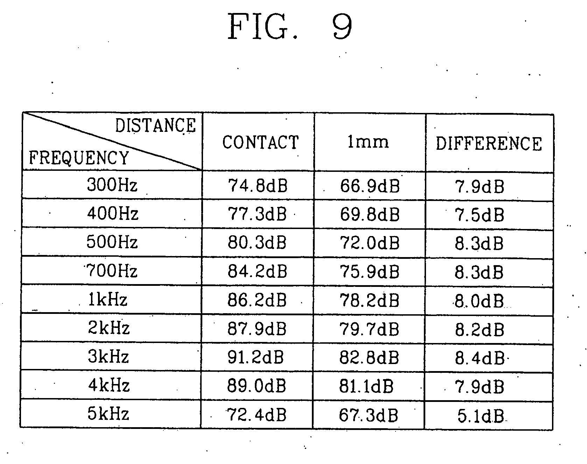

This minimization of sound is, at least in part, a function of the distance between the user and terminal. For example, a large difference in sound volume exits as a result of leakage within a certain distance range. On the other hand, a small difference in sound volume exists when this range goes beyond a certain distance as noted by testing data set forth in Figures 8 and 9 (discussed in greater detail below).

Thus, in the present invention, sound generated from the receiver is leaked before it is transmitted to the user. As a result, sound can be transmitted to the user from the point in time when leakage is completed. Thus, regardless of a change in the reception distance between the user and terminal, the change in the sound volume transmitted to the user can be minimized in accordance with the present invention.

Operation of the receiver unit will now be described in detail with reference to the graph of Figure 8 and the diagram of Figure 9. Curve S of the graph in Figure 8 is obtained when the distance between the user and the terminal is 0, and Curve T is obtained when the distance between the user and the terminal is 1mm. When the frequency discharged from the receiver is 1 KHz and a reception distance between the user and the terminal is 0, sound volume is 86.2 dB as indicated by Point O. If a reception distance between the user and the terminal is 1mm, a sound volume is 78.2 dB as indicated by Point R, the resulting sound volume difference is therefore 8.0 dB, which is significantly smaller than the Conventional Art.

Specifically, compared with the conventional art, as shown in Figure 3, when the reception distance is 0 at a 1 KHz discharge frequency the sound volume is 104.4 dB, and when the reception distance is 1mm the sound volume is 86.2 bB, which results in a difference of 18.2 dB. Therefore, it is noted that a sound volume difference based on the reception distance is considerably smaller by adopting the present invention.

According to a measurement result obtained even at a different discharge frequency band generated from the receiver, a sound volume difference according to a reception distance can be remarkably small when adopting the receiver unit of the present invention, compared to that of the conventional art.

As so far described, the receiver unit of the terminal device of the present invention has the following advantages.

A sound leakage unit is installed between the front side of the receiver and the inner side of the inner case in order to leak a portion of the sound generated from the receiver. Accordingly, after the sound generated from the receiver is completely leaked within a certain range, it is transferred to the user through the sound discharge hole. Thus, the change in the sound volume according to the change in the reception distance between the terminal and the user can be minimized.

In addition, the change in the sound volume transferred to the user according to the change in the reception distance can be minimized, so that the receiver unit can be easily and conveniently used and satisfy user's various desires.

As the present invention may be embodied in several forms without departing from the scope thereof, it should also be understood that the above-described embodiments are not limited by any of the details of the foregoing description, unless otherwise specified, but rather should be construed broadly within its scope as defined in the appended claims, and therefore all changes and modifications that fall within the scope are therefore intended to be embraced by the appended claims.

## Claims

1. A mobile communications terminal, comprising:
- a body (6) including a case member (4) having a plurality of sound discharge holes (10) therein for outwardly discharging sound from the body;
- a receiver (8) disposed within the body (2, 4) and adapted to generate sound, the receiver comprising a housing wall (14) having a plurality of sound path holes (24) therein;
- a sound controller between the receiver (8) and the case member (4) and configured to control discharge of sound from the sound path holes (24) through the sound discharge holes (10);
**characterized in that**
the sound controller includes a sound leakage unit (30) providing a plurality of leakage holes (28, 38) spaced apart along a circumferential direction, wherein the leakage holes (28, 38) are configured to allow a portion of the sound from the sound path holes (24) to leak through the leakage holes to an inner space of the body (6),
the sound leakage holes (28) are slot-shaped and are located between opposite first and second sides of the sound leakage unit (30) such that the sound leakage holes (28) are not open to the opposite sides of the sound leakage unit (30), wherein the first side is fixed to a circumferential side of the housing wall (14) and the second side is fixed at the inner side of the case member (4).

2. The terminal of claim 1, wherein the leakage holes (28, 38) are arranged at regular intervals in the circumferential direction.

3. The terminal of claim 1 or 2, wherein the sound leakage unit (30) is configured to maintain a spacing between the housing wall (14) of the receiver and the case member (4).

4. The terminal of any one preceding claim, wherein the sound leakage unit (30) is configured to include a leakage member (30) which is cylindrical in shape.

5. The terminal of any one of claims 1 to 3, wherein the leakage holes (28) are formed in a leakage member which is formed separately from the housing wall (14) of the receiver and the case member (4).

6. The terminal of any one of claims 1 to 3, wherein the leakage holes (38) are formed in a leakage member which is formed as one body with the housing wall (14) of the receiver.

7. The terminal of claim 5 or 6, wherein a spacing between the receiver (8) and the case member (4) corresponds to a thickness of the leakage member (30).

8. The terminal of any one of claims 5 to 7, wherein the sound leakage unit (30) is configured to include the leakage member (30) which is cylindrical in shape.

9. The terminal of any one preceding claim, wherein the sound path holes (24) are coincident with the sound discharge holes (10).

## Patentansprüche

1. Mobiles Kommunikationsendgerät, umfassend:
- einen Körper (6), der ein Schalenelement (4) mit einer Vielzahl von Tonausstoßlöchern (10) in sich, um Ton aus dem Körper nach außen hin auszustoßen;
- einen Empfänger (8), der innerhalb des Körpers (2, 4) angelegt ist und der eingerichtet ist, um Ton zu erzeugen, wobei der Empfänger eine Gehäusewand (14) mit einer Vielzahl von Tonweglöchern (24) in sich aufweist;
- eine Tonsteuereinrichtung zwischen dem Empfänger (8) und dem Schalenelement (4), die konfiguriert ist, um den Ausstoß von Ton aus den Tonweglöchern (24) durch die Tonausstoßlöcher (10) zu steuern;
**dadurch gekennzeichnet, dass**
die Tonsteuereinrichtung eine Tonstreueinheit (30) umfasst, die eine Vielzahl von Streulöchern (28, 38) vorsieht, die voneinander entlang einer Umfangsrichtung beabstandet sind, wobei die Streulöcher (28, 38) konfiguriert sind, um einem Teil des Tons aus den Tonweglöchern (24) zu ermöglichen, durch die Streulöcher zu einem Innenraum des Körpers (6) zu streuen,
die Tonstreulöcher (28) schlitzförmig sind und sich zwischen gegenüberliegenden ersten und zweiten Seiten der Tonstreueinheit (30) derart befinden, dass die Tonstreulöcher (28) gegenüber den gegenüberliegenden Seiten der Tonstreueinheit (30) nicht offen sind, wobei die erste Seite an einer Umfangsseite der Gehäusewand (14) befestigt ist und die zweite Seite auf der Innenseite des Schalenelements (4) befestigt ist.

2. Endgerät gemäß Anspruch 1, wobei die Streulöcher (28, 38) bei regelmäßigen Intervallen in der Umfangsrichtung angeordnet sind.

3. Endgerät gemäß Anspruch 1 oder 2, wobei die Tonstreueinheit (30) konfiguriert ist, um einen Abstand zwischen der Gehäusewand (14) des Empfängers und dem Schalenelement (4) aufrechtzuerhalten.

4. Endgerät gemäß zumindest einem der vorhergehenden Ansprüche, wobei die Tonstreueinheit (30) konfiguriert ist, um ein Streuelement (30) zu umfassen, das von zylindrischer Form ist.

5. Endgerät gemäß zumindest einem der Ansprüche 1 bis 3, wobei die Streulöcher (28) in einem Streuelement ausgebildet sind, das getrennt von der Gehäusewand (14) des Empfängers und dem Schalenelement (4) ausgebildet ist.

6. Endgerät gemäß zumindest einem der Ansprüche 1 bis 3, wobei die Streulöcher (38) in einem Streuelement ausgebildet sind, das als ein einzelner Körper mit der Gehäusewand (14) des Empfängers ausgebildet ist.

7. Endgerät gemäß Anspruch 5 oder 6, wobei ein Abstand zwischen dem Empfänger (8) und dem Schalenelement (4) einer Dicke des Streuelements (30) entspricht.

8. Endgerät gemäß zumindest einem der Ansprüche 5 bis 7, wobei die Tonstreueinheit (30) konfiguriert ist, um ein Streuelement (30) zu umfassen, das von zylindrischer Form ist.

9. Endgerät gemäß zumindest einem der vorhergehenden Ansprüche, wobei die Tonweglöcher (24) mit den Tonausstoßlöchern (10) zusammenfallen.

## Revendications

1. Terminal de communication mobile, comprenant :
- un corps (6) comprenant un élément de boîtier (4) comportant une pluralité de trous (10) de sortie de son dans celui-ci pour sortir vers l'extérieur le son provenant du corps ;
- un récepteur (8) disposé à l'intérieur du corps (2, 4) et adapté pour générer du son, le récepteur comprenant une paroi de logement (14) comportant une pluralité de trous (24) de trajectoire sonore dans celui-ci ;
- un contrôleur sonore entre le récepteur (8) et l'élément de boîtier (4) et configuré pour commander la sortie du son depuis les trous (24) de trajectoire sonore à travers les trous (10) de sortie de son ;
**caractérisé en ce que**
le contrôleur sonore comprend une unité (30) de fuite sonore fournissant une pluralité de trous (28, 38) de fuite espacés le long d'une direction circonférentielle, dans lequel les trous (28, 38) de fuite sont configurés pour permettre à une partie du son provenant des trous (24) de trajectoire sonore de fuir à travers les trous de fuite vers un espace interne du corps (6),
les trous (28) de fuite sonore sont en forme de fentes et sont placés entre des premier et deuxième côtés opposés de l'unité (30) de fuite sonore d'une manière telle que les trous (28) de fuite sonore ne sont pas ouverts vers les côtés opposés de l'unité (30) de fuite sonore, dans lequel le premier côté est fixé à un côté circonférentiel de la paroi de logement (14) et le deuxième côté est fixé au niveau du côté interne de l'élément de boîtier (4).

2. Terminal selon la revendication 1, dans lequel les trous (28, 38) de fuite sont agencés à des intervalles réguliers dans la direction circonférentielle.

3. Terminal selon la revendication 1 ou 2, dans lequel l'unité (30) de fuite sonore est configurée pour maintenir un espace entre la paroi de logement (14) du récepteur et l'élément de boîtier (4).

4. Terminal selon l'une quelconque des revendications précédentes, dans lequel l'unité (30) de fuite sonore est configurée pour inclure un élément de fuite (30) qui est de forme cylindrique.

5. Terminal selon l'une quelconque des revendications 1 à 3, dans lequel les trous (28) de fuite sont formés dans un élément de fuite et qui est formé séparément de la paroi de logement (14) du récepteur et de l'élément de boîtier (4).

6. Terminal selon l'une quelconque des revendications 1 à 3, dans lequel les trous (38) de fuite sont formés dans un élément de fuite qui est formé comme un tout avec la paroi de logement (14) du récepteur.

7. Terminal selon la revendication 5 ou 6, dans lequel un espacement entre le récepteur (8) et l'élément de boîtier (4) correspond à une épaisseur de l'élément de fuite (30).

8. Terminal selon l'une quelconque des revendications 5 à 7, dans lequel l'unité (30) de fuite sonore est configurée pour inclure l'élément de fuite (30) qui est de forme cylindrique.

9. Terminal selon l'une quelconque des revendications précédentes, dans lequel les trous (24) de trajectoire sonore coïncident avec les trous (10) de sortie de son.
